# EUROPEAN PATENT APPLICATION

(11) **EP 2 446 961 A1**
(43) Date of publication of application: **02.05.2012**
(21) Application number: 10014157.1
(22) Date of filing: 29.10.2010
(51) Int. Cl.: B01J 19/10, B29B 13/08, C01B 33/02

(54) **Method for modifying the structural properties of silicon by ultrasonication**

(71) Applicant: Max-Planck-Gesellschaft zur Förderung der Wissenschaften e.V., 80539 München (DE)
(72) Inventor: Skorb, Ekaterina, 14476 Potsdam-Golm (DE); Möhwald, Helmuth, 55411 Bingen (DE)
(74) Representative: Katzameyer, Michael

(57) **Abstract**

The invention relates to novel and improved methods for preparing porous silicon and for modifying the structural and/or optical properties of silicon.

Generally, the invention relates to a method for modifying the structural properties of silicon by ultrasonication in the presence of a liquid HF-free medium wherein said structural properties are selected from the group consisting of roughness, porosity, crystallinity, number of defect states, hydrogen-terminated bonds, quantum dots, and centers for charge separation.

In more specific embodiments, the ultrasonication is effected in a liquid medium comprising a solvent which is selected from the group consisting of an organic solvent, including an alcohol, water, an ionic liquid or a mixture thereof.

Preferably, the liquid medium for ultrasonication further contains an additive which is selected from the group consisting of hydrogen, a hydrogen donor, e.g. NaBH₄, Mg or A1, a charged or uncharged surfactant, a polyelectrolyte, a complexation agent comprising an element E, with E = N, O, F, H, or mixtures thereof.

## Description

### Background

High power ultrasound has been used in industry for 60 years, in applications such as cleaning and more recently, the processing of materials for waste remediation and pharmaceutical manufacture. Beyond these claims highly intensive ultrasound can provide highly non-equilibrium conditions for synthetic chemistry. The effect of ultrasound on matter occurs through acoustic cavitation: generation, growth, and collapse of bubbles. Sonochemistry can be described in terms of the "hot-spot theory": volatile solutes undergo thermal cleavage with the formation of radical or excited species within a cavitation bubble. These species may induce subsequent reactions with less-volatile substrates at the bubble shell or in the bulk medium. The chemical effect of the intense ultrasound is based on generation of free radicals during cavitation.

Application of ultrasound to chemical synthesis allows accelerating a reaction or permitting use of less aggressive conditions, reducting the number of steps which are required using normal methodology, and opens the possibilities for alternative reaction pathways. The interfacial region around cavitation bubbles has very high temperature, pressure, and (possibly) electric field gradients. Liquid motion in this vicinity also generates very large shear and strain gradients. These are caused by the very rapid streaming of solvent molecules around the cavitation bubble, as well as by the intense shock waves emanating upon collapse. The physical effects primarily responsible for the enhancement of chemical reactions include (a) improvement of mass transport from turbulent mixing and acoustic streaming, (b) the generation of surface damage at liquid-solid interfaces by shock waves and microjets, (c) the generation of high-velocity interparticle collisions in slurries, and (d) the fragmentation of friable solids to increase the surface area.

However, sonochemistry of solids and a quantitative understanding of their sonochemical modification are emerging only now, however, it could open fresh prospects in the area of novel "green" method development for material construction. The study of silicon is a very active field of research, because of the interesting fundamental physical properties of these mesoscale objects and of promising applications in advanced electronic devices and optoelectronic devices.

Of all the forms of silicon containing quantum dots, porous silicon is the one that has attracted the most attention to date, mostly because of its intense visible photoluminescence. Numerous models have been proposed to explain its photoluminescence, including quantum confinement, surface states, defects in the oxide, and even specific chemical species (e.g., siloxenes). Presently, although a detailed understanding of the photoluminescence has yet to be achieved, it is usually accepted that the band gap opens as a result of quantum confinement, which pushes the photoluminescence in to the visible range for crystallite sizes below 5 nm.

Nowadays porous silicon is mostly produced by electroless or electrochemical etching of silicon substrates in the presence of hydrogen fluoride acid as the main etching agent. It is also known to use a concomitant ultrasound treatment to assist the etching procedure. Liu et al. describe a method for fabricating porous silicon material by ultrasonically enhanced anodic electrochemical etching (Solid State Communications 127, 583-588 (2003)). S. Kalem et al. investigated the effect of light exposure and ultrasound on the formation of porous silicon produced by an electroless stain-etching technique (Journal of Porous Materials 7, 381-383 (2000). El-Bahar et al. disclose ultrasound treatment for enhancing the photoluminescence of porous silicon (Phys. State Sol. 197, No. 2, 340-344 (2003).

All the techniques for preparing porous silicon disclosed in the above references, however, rely on the use of hydrogen fluoride acid, a very aggressive medium. Moreover, some of the prior art methods have to be implemented at low temperatures (e.g. toluene solvent at -70 °C) in the presence of colloidal sodium (e.g. N. Arul Dhas et al. Chem. Mater. 10, 3278-3281 (1998)) which means very precise control of synthetic conditions with high production costs.

Thus, one object underlying the presence invention was to provide an improved method which enables to omit the use of HF or similar aggressive media and still obtain porous silicon in a fast and efficient manner. A related object was to provide an improved method for modifying the structural and/or optical properties of silicon in the absence of HF.

These objects are achieved according to the present invention by providing the method for modifying silicon, in particular preparing porous silicon, by ultrasonication in a HF-free liquid medium according to claims 1 and 2. More specific and/or preferred embodiments of the invention are the subject of further claims.

### Description of the Invention

The present invention provides a method for modifying the structural properties of silicon by ultrasonication in the presence of a liquid HF-free medium wherein said structural properties are selected from the group consisting of roughness, porosity, crystallinity, number of defect states, hydrogen-terminated bonds, quantum dots, and centers for charge separation.

In a preferred embodiment of the method of the invention, porous silicon is produced. More specifically, the porous silicon produced has pores in a size range of from 0.5 nm to 500 nm.

In a further preferred embodiment of the invention, hydrogen terminated bonds are generated on the surface of the silicon.

The present invention provides a method for modifying a broad range of silicon materials. The silicon to be modified may be amorphous, polycrystalline, mono-crystalline or represent or comprise quantum dots. The silicon to be modified may be the surface of a silicon wafer, silicon deposited on a substrate, or silicon particles in solution.

Said substrate may be any substrate capable to be coated with silicon and suited for the intended application. More specifically, the substrate is selected from the group consisting of glass, a metal, polymer, ceramic or silicon material.

In a specific embodiment of the invention, the substrate is patterned. Such patterns can be produced by Ion Beam Assisted Vacuum Deposition known in the art via deposition of amorphous silicon onto glass through a specific mask which protects some areas from deposition thus allowing surface patterning.

In the method according to the present invention, the HF-free liquid medium comprises a solvent which is selected from the group consisting of an organic solvent, water, an ionic liquid or a mixture thereof.

As mentioned above, the liquid medium may be the subject of sonolysis during the high intensity ultrasound treatment (chemical effect of ultrasound). The produced species can be involved in the design of silicon structures through the reaction with pre-formed not-terminated bonds etc. Moreover the liquid vapor pressure affects the bubble collapse and the liquid velocity influences the speed of the eroding processes.

The organic solvent may be selected from the group consisting polar protic solvents (e.g. ethanol, 2-propanol), polar aprotic solvents (e.g. ethyl acetate, tetrahydrofuran) and non-polar solvents (e.g. hexane). In the case of polar protic solvents, individual or in mixture with water, the possibility of silicon oxidation should be taking into account.

In a specific embodiment of the present invention, the liquid medium is a mixture of water and an alcohol, in particular a C₃-C₉ alcohol, preferably water with 2-propanol. In particular, the existing vapor pressure in the case of 2-propanol (or a lower alkyl alcohol with similar vapor pressure) allows to achieve the formation of samples with very high porosity in comparison with a pure water solution. Compared to conventional organic compounds widely used as solvents, most ionic liquids have practically no measurable vapour pressure and possess a comparatively high chemical stability at high temperatures. Thus, their influence onto bubble collapse is different than that of organic compounds.

The ionic liquid may be any ionic liquid known in the art, in particular any one which is liquid at room temperature. More specifically, the ionic liquid may be selected from the group including butylmethylimidazolium chloride (BuMeImCl), butylmethylimidazolium tetrafluoroborate (BuMeImBF4), butylmethylimidazolium hexafluorophosphate (BuMeImPF6), urea ammonium nitrate (UAN), and decylmethylimidazolium tetraphenylborate (DecMeImBPh4), 1-butyl-3-methylimidazolium-bis(trifluoromethylsulfonyl)imide [C4mim]-[Tf2N].

During sonochemical processes in solutions a number of reactive species is produced. In particular, the sonochemical processes in water in the presence of oxygen have been described in detail in Weissler, A. J. Am. Chem. Soc. 1959, 81, 1077. Also, some sonochemical reactions in a few room-temperature ionic liquids have been studied (e.g. Oxley, J. D.; Prozorov, T.; Suslick, K. S. J. Am. Chem. Soc. 2003, 125, 11138; Flannigan, D. J.; Hopkins, S. D.; Suslick, K. S. J. Organomet. Chem. 2005, 690, 3513). These studies have reported a significant increase in the rates of sonochemical reactions relative to other solvent systems as well as some selectivity in the reaction products. Room-temperature ionic liquids have emerged as unique solvents for a variety of applications, including liquid-liquid extraction, electrochemistry, ionic liquid crystals, and biphasic catalysis. Their properties such as high thermal stability, large liquid range, and negligible vapor pressure make them potentially attractive for use in sonochemical reactions.

If the sonochemical process of the invention takes place in water, a fine structure having a porosity near 40 % can be formed and a possible process of oxidation should be also taken into account. In the case of a long-term treatment, such as more then 90 min at 57 W/cm² intensity, in an aqueous solution, in particular water, also a structure comprising silicon quantum dots in the matrix of SiOₓ can be formed due to simultaneous processes of silicon recrystallization and oxidation.

The presence of a solvent with high vapor pressure (e.g. 2-propanol) allows to increase porosity significantly to 60-70 %. A process in solvents with negligible vapor pressure such as ionic liquids (e.g. IL: 1-Butyl-3-methylimidazolium chloride) allows to form structures with medium porosity (40-50 %) and with irregular pore distribution.

In a preferred embodiment of the invention, the liquid medium further comprises at least one additive. Principally, the additive may be any additive which is capable to assist the desired modification of silicon. For example, the additive is may be selected from the group comprising or consisting of hydrogen, a hydrogen donor, e.g. NaBH₄, Mg or A1, a charged or uncharged surfactant (e.g.. sodium dodecyl sulphate, Triton X, ethylenglycol), a polyelectrolyte (e.g. polyvinylpyrrolidone), a complexation agent for the formation of Si-E (E = N, O, F, H) bonds. The additive may be added in any suitable form known in the art and in particular may be comprised within a particle (which may be porous or hollow) or a shell, such as a nanoparticle or a core-shell-(nano)particle, or coated with a protective layer which is removed or disrupted or becomes permeable during ultrasonication.

In one specific embodiment, the additive is selected from the group consisting of hydrogen and a hydrogen donor, e.g. NaBH₄, Mg or A1, and hydrogen-terminated bonds are formed on the surface of the silicon during ultrasonication.

In another specific embodiment, the additive is a complexation agent for the formation of Si-E (E = N, O, F, H) bonds. The term "complexation agent" as used herein, means any agent which, under the conditions of the ultrasonication, comprises or provides the element E in an active form, capable to react with Si and to form covalent Si-E bonds. The active form may e.g. be an ionic form or a radical form. In a more specific embodiment the complexation agent comprises or provides an agent selected from the group consisting of F⁻, NH₃, NH₄⁺, H•, OH• In the case of E = H, the complexation agent can be simultaneously be a hydrogen donor.

Consequently, the presence of an additive in the water-alcohol solution is advantageous or even necessary for the stabilisation of formed structures e.g. through the formation of Si-H bonds in the presence of hydrogen donor materials. If Si-F, Si-N or Si-O bonds are generated, a general stabilisation of formed structures is likely to result. Moreover, in particular for Si-O bonds the final positive effect is the possible formation of a SiOₓ matrix with Si quantum dots in its composition.

If aluminium is used as an additive, the possible diffusion of aluminium (but not magnesium) in the structure of porous silicon could positively affect its electric properties (Bock,R.; Schmidt, J.; Brendel, R. Appl. Phys. Lett. 2007, 91, 112112). However in the presence of magnesium the process of hydrogen generation is faster in comparison with aluminium and porous structure formation is also faster.

The use of NaBH₄, Al, Mg (hydrogen donor material) with or without NaF and polyelectrolytes decreases the speed of silicon modification due to additional ions which are present in solution and change of solvent parameters. Polyelectrolytes and/or surfactants alone can influence the bubble collapse and structure stabilisation without the formation of covalent bonds with Si. In case of the presence of F⁻ in the solution, alone or together with other additives, generated Si-F covalent bonds will have a positive effect with respect to structure stabilisation.

Thus, the presence of a further additive, in particular selected from the group consisting of a polyelectrolyte, a surfactant, F- or combinations thereof, allows a better control of the process in comparison with the addition of just magnesium and/or aluminium in e.g. a water/2-propanol solution when all changes are very fast and difficult to control.

The parameters of ultrasound irradiation may vary in a broad range depending from the desired modification, specific silicon substrate and liquid media used. Typically, the frequency of the sonochemical process is in a range of from 1 to 100 kHz, more specifically from 10 kHz to 50 kHz, whereas the intensity of ultrasound exposure typically is in a range from 1 to 200 W/cm², more specifically in a range from 5 to 100 W/cm². The duration of sonication can be varied from 1 min to several hours, e.g. 1- 5 hours.

Typically, the modification of structural properties of the silicon in the present method will also affect one or more of the following properties of the silicon: electronic properties, charge separation, optical properties, electro-adsorption and electro-reflection.

In particular, the porous silicon obtainable by the present method shows favourable properties of photoluminescence.

In water solution the photoluminescent centres are small and very close to each other, thus in µ-confocal photoluminescent measurements a collaborative effect is visible. In comparison, in the case of other solvents the centres are not so close to each other and the effect is not so pronounced. Moreover, in the case of long term modification of silicon in aqueous solution the luminescence is presumably at least partially due to the formation of Si-QD in porous matrix of SiOₓ. Otherwise in the case of solvents with high vapor pressure (e.g. mixture of water with 2-propanol) the luminescence could be explained due to defects states in the walls of porous silicon. In defect models of the PL from porous Si the luminescence arises from carriers localised at extrinsic centers, either in the Si or in an oxide that covers the Si surface. One more reason for photoluminescence is the formation of hydrogen terminated bonds as well as not terminated bonds. This suggestion followed work which had demonstrated the existence of a tuneable visible PL band proposed as due to SiHx groups. (Cullisa, A. G.; Canham, L. T.; Calcott, P. D. J. J. Appl. Phys. 1997, 82, 909).

In order to clarify the underlying ultrasound-driven physical and chemical processes in a HF-free liquid-solid system and to optimize the sonication conditions, the present inventors have performed silicon modification under different sonication conditions. In the course of these experiments, ultrasonic irradiation in water (pure, with additives), alcohol and ionic liquid solution was performed and the resulting modified silicon samples were analyzed.

These experiments and the resulting modified, in particular porous silicon materials are described in more detail in the Examples below.

The mechanism of the sonochemical modification is complex and involves a variety of aspects related to melting, recrystallization and selective etching together with possible oxidation of surfaces. Thus, main effects of ultrasound on the material are the reactions between it and sonogenerated species and high temperature treatment.

Solutions chosen for investigation of ultrasound exposure effect onto silicon were divided into the following groups according to their chemical properties relevant for ultrasound modification: water, organic solvent and ionic liquid. Moreover some additives could be effectively used to influence the sonochemical process in solutions (Bunker E. et al. Appl. Mater. Interfaces 2010, 2, 11; Borodina E. et al. Appl. Mater. Interfaces 2009, 1, 996; Radziuk, D. et al. J. Phys. Chem. C 2010, 114, 1835) and provide the possibility to form some additional radicals during the sonochemical process which also could be involved in the silicon modification and have interesting effects of the possibility to escape the surface oxidation with simultaneous formation of hydrogen terminated bonds. Thus for example metal particles such as magnesium, aluminum, etc. in water, alcohol, water-alcohol solution, etc. could react very fast to be oxidized with formation of hydrogen in the system which itself could be involved in radical processes with the formation of additional non-terminated hydrogen which could be attached to the modified silicon surface.

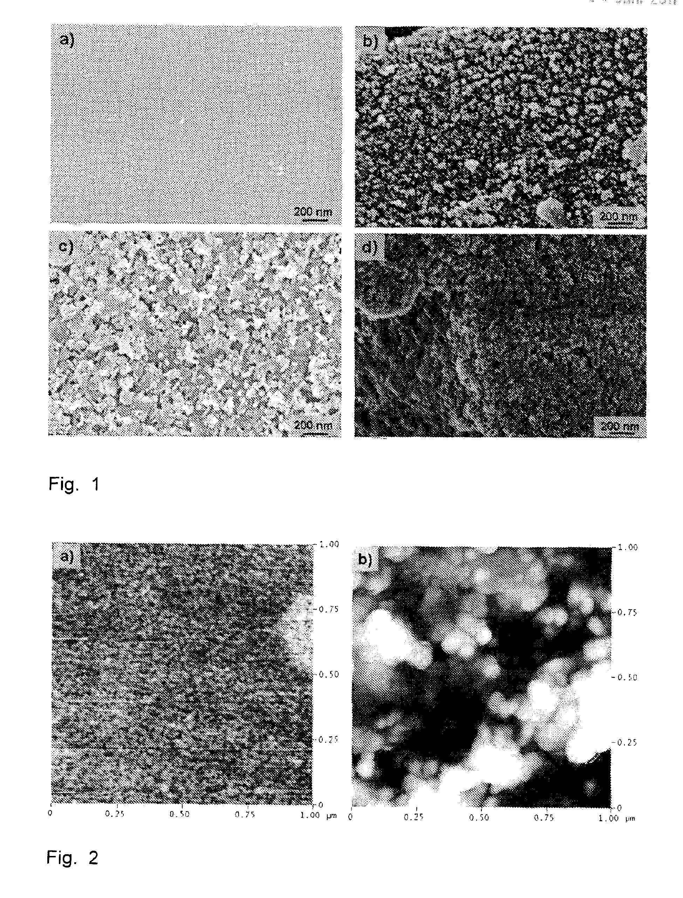

Figure 1 demonstrates that after sonochemical treatment, depending on the type of solvent, a different surface development can be achieved. Moreover, from the last image, where the crack is analyzed to assess the depth of possible silicon development, it is evident that several micron deep silicon modifications could be achieved. It was also possible to control the thickness of the developed silicon layer by varying the exposure time, solvent and additives present. Atomic force microscope roughness analysis (Fig. 2) shows that the roughness of the surface increases dramatically.

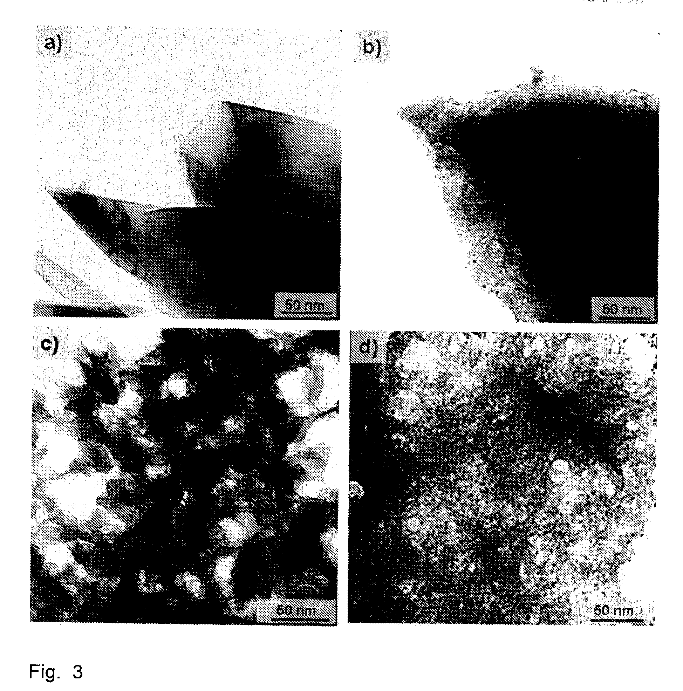

The TEM technique has been used to provide the most detailed information on the internal structure of porous silicon (Fig. 3). The overall structure of porous Si layers depends very strongly upon exposure conditions. As it is seen pore diameters, form and spacings can be varied. When silicon is subjected to exposure in water solution, the pore structure formed is generally significantly finer than that formed in water-alcohol solution. This is illustrated in Fig. 3b.c by TEM cross-sections obtained from such materials, for porosities in the range 25%-40% in the first case and its increase to 60-70% in the case of mixing water with alcohol and a medium range 40-50% in the case of ionic liquid use. Pores with sizes between 1 nm to 50 nm are present (Fig. 3a-c). In general, porous silicon is an interconnected network of air holes (pores) in silicon. Porous silicon is classified according to the pore diameter, which can vary from a few nanometers to a few micrometers depending on the formation parameters.

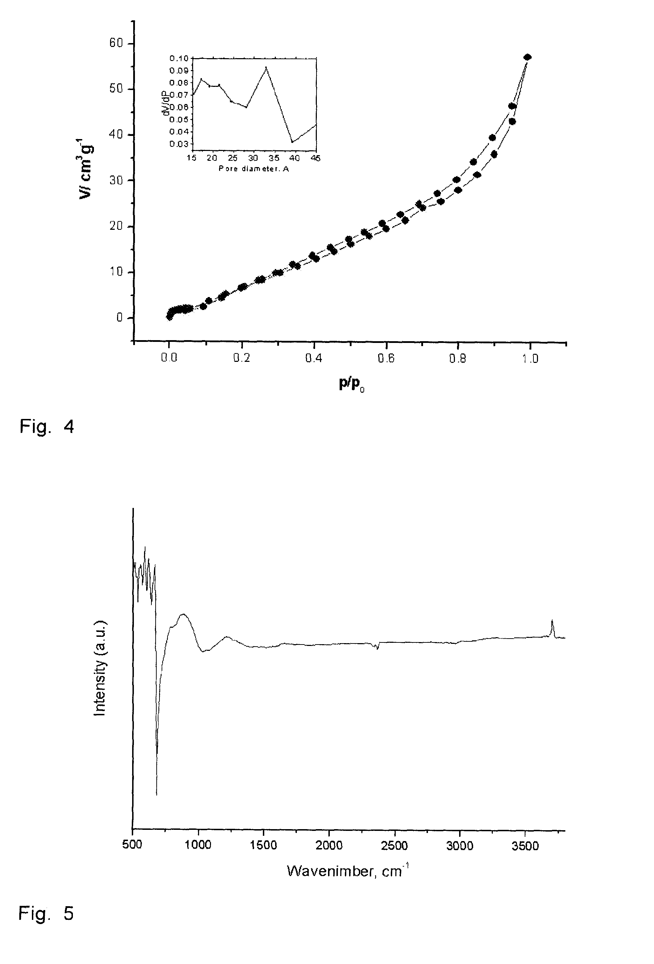

The adsorption-desorption isotherm which indicates the formation of porous material is also presented (Fig. 4) for sonochemically modified silicon. Moreover the IR spectrum (Fig. 5) indicates that indeed as it was supposed, the formation of hydrogen terminated bonds is possible when the sonochemical exposure is performed in the presence of some hydrogen donor materials (here magnesium presented).

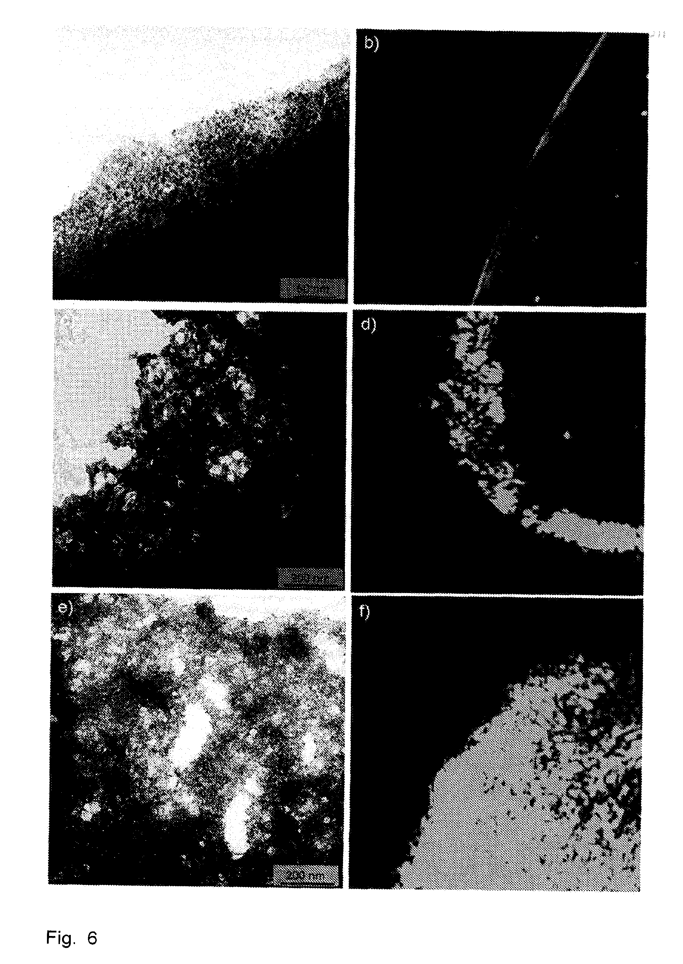

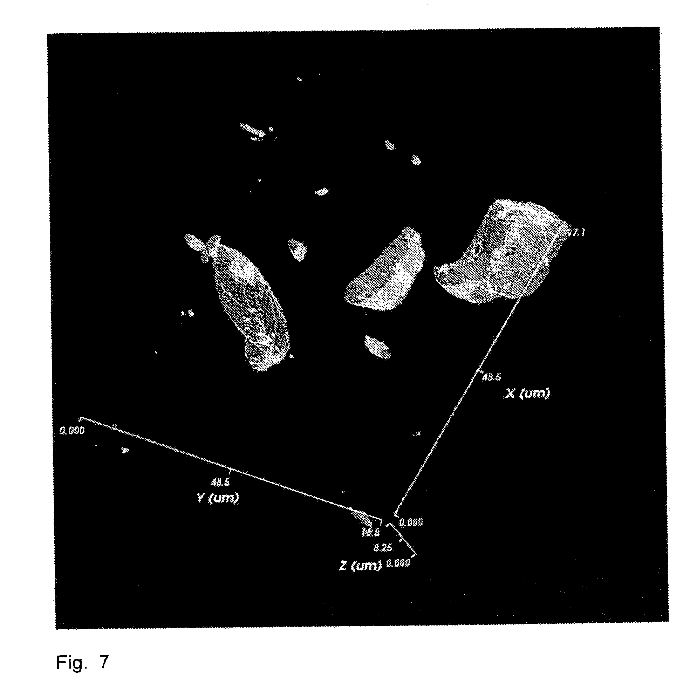

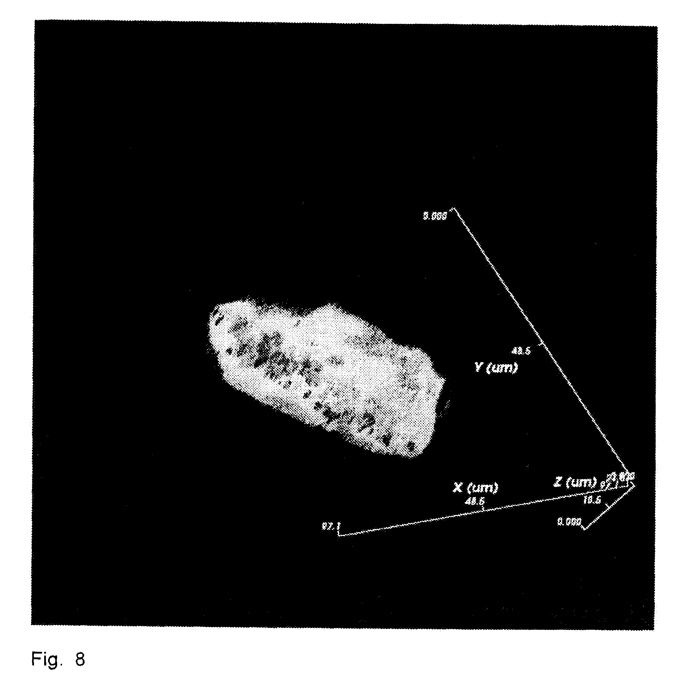

It should be also noted that the sonochemically modified silicon is optically active, i.e. it yields photoluminescence (Fig. 6). This is a very important characteristic because it may allow light amplification and therefore lasing by taking advantage of the microcavity light confinement effect. Moreover, it was possible to measure the light emitted by a single point on the silicon surface by making 3D reconstruction of the porous top layer structure (Fig. 7, 8). This allows to understand that the modification first of all starts from the surface (Fig. 7): all fluorescent dots are on the surface of sonochemically exposed samples. It is also assumed that these points first of all could be formed on the places where bubble collapse takes place due to shock waves or liquid jets which allows to introduce defects in silicon which produce defect states.

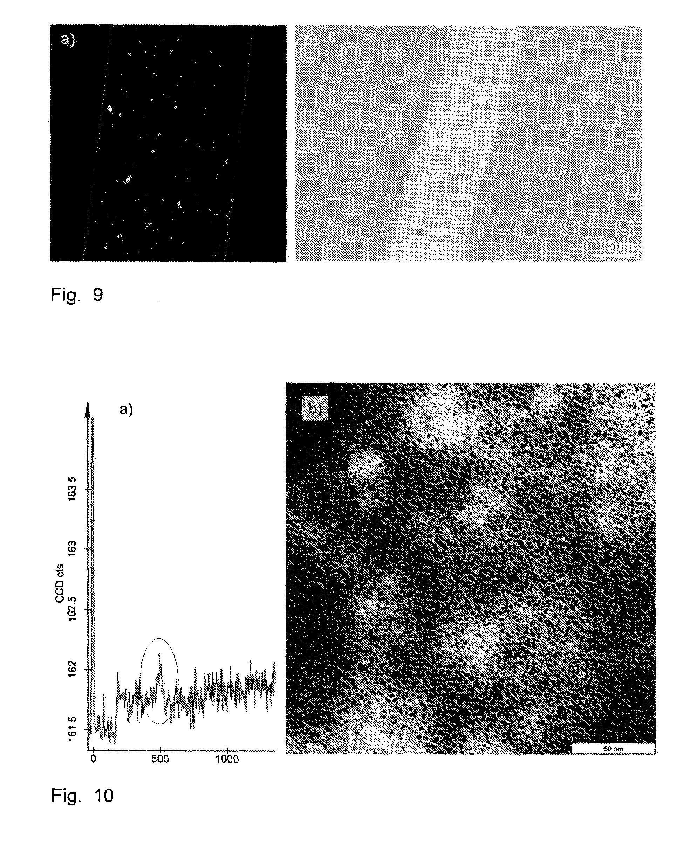

Further modification allows to go deeper inside the silicon and it is seen in Fig. 8, that the fluorescent centers are distributed both on the surface and in the inner structure of porous silicon. The fact that one can change locally the degree of structural order in solid silicon together with achieving the photoluminescence allows to develop a technique of modification of patterned surfaces (Fig. 9) with the formation of distributed luminescent spots. This means that there are defects which could be also used for charge separation allowing to develop an advanced method in the area of photovoltaic devices.

### Brief Description of the Figures

**Figure 1****.** Scanning electron microscope (SEM) images of silicon (a) before modification; (b-d) sonochemically modified silicon at 57 W/cm²: (b) in aqueous solution in the presence of magnesium; (c) water-alcohol solution; (d) ionic liquid after 30 min of exposure.
**Figure 2****.** Atomic force microscope (AFM) image and roughness analysis of silicon a) before modification and b) sonochemicaly modified silicon at 57 W/cm² in water-alcohol solution in the presence of magnesium after 30 min of exposure.
**Figure 3****.** Transmission electron microscopy (TEM) images of silicon (a) before modification; (b-d) sonochemically modified silicon at 57 W/cm² exposure in (b) aqueous solution in the presence of magnesium; (c) water-alcohol solution; (d) ionic liquid after 30 min of exposure.
**Figure 4****.** Adsorption-desorption nitrogen isotherm of sonochemically modified silicon at 57W/cm² exposure in aqueous solution in the presence of magnesium. Inset shows the pore size distribution.
**Figure 5****.** IRRA spectrum of sonochemically modified silicon at 57 W/cm² exposure in the presence of magnesium in water-alcohol solution after 30 min of exposure.
**Figure 6****.** (a,c,e) Transmission electron microscopy (TEM) images and (b,d,f) confocal fluorescent modes of photoluminescence of porous silicon from sonochemically modified silicon at 57 W/cm² exposure in (a,b) aqueous solution in the presence of magnesium; (c,d) water-alcohol solution; (e,f) ionic liquid after 30 min of exposure.
**Figure 7****.** 3D reconstruction of fluorescent and transmittance confocal microscope mode of sonochemically modified silicon at 57 W/cm² after 10 min of exposure in the presence of magnesium in water-alcohol solution.
**Figure 8****.** 3D reconstruction of fluorescent and transmittance confocal microscope mode of sonochemically modified silicon at 57 W/cm² after 20 min of exposure in the presence of magnesium in water-alcohol solution.
**Figure 9****.** (a) Confocal microscope fluorescent mode of sonochemically modified patterned silicon (b) at 57 W/cm² after 30 min of exposure in the presence of magnesium in water-alcohol solution, red lines show the pattern area.
**Figure 10****.** (a) Raman spectrum of porous silicon; (b) TEM images of formed silicon crystal.
**Figure 11****.** Photoluminescence spectrum of porous silicon from formed silicon crystal.

The present invention is illustrated in more detail in the following non-limiting examples.

### EXAMPLE 1

### Preparation of a porous silicon by ultrasonication in an aqueous liquid medium

In a specific embodiment of the present invention, a porous silicon layer was produced by ultrasound treatment of a silicon wafer in a HF-free aqueous medium.

*Medium.* 150 ml of water with 0,5g of magnesium powder. The frequency of the sonochemical process was constant 20 kHz, whereas the intensity of ultrasound exposure was varied from 7 to 57 W/cm². The duration of sonication was also varied from 1 min to 90 min.

*Materials.* Silicon wafers were used as received (Sigma Aldrich). Magnesium powder was used as received (325 mesh, 99,8%, Alfa Aesar). The water was purified before use in a three stage Milipore Milli-Q Plus 185 purification system and had a resistivity higher than 18.2 MΩm•cm.

*Ultrasonication (US).* Silicon wafers (1x2 cm) were degreased in isopropanol flow and rinsed in purified water. Each one was sonicated in solution in a thermostated flow cell (FC100L1-1S) (at 65°C temperature) with the VIP1000hd (Hielscher, Germany) operated at 20 kHz with a maximal output power of a 1000 W ultrasonic horn BS2d22 (head area of 3.8 cm²) and equipped with a booster B2-1.2. The maximum intensity was calculated to 57 W/cm² at a mechanical amplitude of 81 mm.

### EXAMPLE 2

### Preparation of a porous silicon by ultrasonication in ionic liquid medium

Experiments were performed under similar conditions as in Example 1, except that a room-temperature ionic liquid, 1-butyl-3-methylimidazolium chloride (>98%, Aldrich), under argon flow was used as the HF-free liquid medium. Sonication time was varied between 1 and 90 min. Additive NaBH₄.

### EXAMPLE 3

### Characterization of porous silicon samples prepared by ultrasonication according to the invention

*Scanning electron microscopy* (SEM) measurements were conducted with a Gemini Leo 1550 instrument at an operation voltage of 3 keV.

Figure 1 demonstrates that after sonochemical treatment, depending on the type of solvent, a different surface development can be achieved. The first image (Fig. 1a) shows an untreated surface of silicon which is flat and not porous. However, by applying an high intense ultrasonic treatment of the surface the formation of a highly deepened surface can be obtained already after 30 min of silicon modification in aqueous solution in the presence of magnesium (Fig. b), in water-alcohol-solution (Fig. 1c) as well as in the ionic liquid 1-butyl-3-methylimidazolium chloride (Fig. 1d). Moreover, from the last image, where the crack is analyzed to know the depth of possible silicon development, it is evident that several micron deep silicon modifications could be achieved. It was also possible to control the thickness of the developed silicon layer by varying the exposure time, solvent and additives present.

Atomic force microscope roughness analysis (Fig. 2) shows that the roughness of the surface increases dramatically from < 1 nm to >20 nm.

*Transmission electron microscopy* (TEM) images were obtained on a Zeiss EM 912 Omega transmission electron microscope operating at 300 kV. The samples were ultramicrotomed (Leica EM FC6) and placed onto the copper grids coated with carbon film.

The TEM technique has been used to provide the most detailed information on the internal structure of porous silicon (Fig. 3). The overall structure of porous Si layers depends very strongly upon exposure conditions. As it is seen pore diameters, form and spacings can be varied. When silicon is subjected to exposure in water solution, the pore structure formed is generally significantly finer than that formed in water-alcohol solution. This is illustrated in Fig. 3b.c by TEM cross-sections obtained from such materials, for porosities in the range 25%-40% in the first case and its increase to 60-70% in the case of mixing water with alcohol and a medium range 40-50% in the case of ionic liquid use. Pores with sizes between 1 nm to 50 nm are present (Fig. 3a-c) .

*BET analysis.* The specific surface areas of the samples were determined by a Micromeritics ASAP 2000 surface area analyzer. All samples were outgassed under vacuum at 120°C for 8 hours before N₂ adsorption. The adsorption-desorption isotherm which indicates the formation of porous material is presented in Fig. 4 for the sonochemically modified silicon.

*IR spectroscopy.* Spectra were acquired with an IFS 66 Fourier transform (FT)-IR spectrometer from Bruker (Ettlingen, Germany) equipped with an external reflectance unit containing a Langmuir trough setup. The infrared beam was directed through the external port of the spectrometer and was subsequently reflected by three mirrors in a rigid mount before being focused on the sample surface. A KRS-5 wire grid polarizer was placed into the optical path directly before the beam hit the sample surface. The reflected light was collected at the same angle as the angle of incidence. The light then followed an equivalent mirror path and was directed onto a narrow band mercury-cadmium-telluride detector, which was cooled by liquid nitrogen. The entire experimental setup was enclosed to reduce relative humidity fluctuations. A total of 128 scans were acquired with a scanner velocity of 20 kHz at a resolution of 8 cm⁻¹.

The IR spectrum (Fig. 5) indicates that indeed, as it was supposed, the formation of hydrogen terminated bonds is possible when the sonochemical exposure is performed in the presence of some hydrogen donor materials (here magnesium presented). Many of the features of the spectra produced by the silicon are very similar to those of typical Si-H bonds namely features at 645 cm⁻¹ of Si-H₃, Si-H₂, Si-H wagging, as well as at 850 cm⁻¹ Si-H₃ bending and at 890 cm⁻¹ Si-H₂ bending. However, the silicon also show features at 1000-1200 cm⁻¹ the Si-O-Si stretching and at 2170-2300cm⁻¹ O-Si-H stretching and relatively weak features at 800 cm⁻¹ Si-O-Si bending; 940 cm⁻¹ and 975 cm⁻¹ Si-H bending of H₂Si-O₂ that are associated with molecular complexes that include oxygen.

*Confocal fluorescence measurements* were conducted on a Leica TCS SP inverted confocal microscope system (Leica, Germany). The photoluminescence was obtained at room temperature by using either a pulsed excitation nitrogen laser (337 nm) or a continuous excitation HeCd laser (325 nm). A confocal Raman microscope (CRM200, WITec, Ulm, Germany) equipped with a piezo-scanner (P-500, Physik Instrumente, Karlsruhe, Germany). A diode-pumped linearly polarized 785 nm near infra-red (NIR) laser (Toptica Photonics AG, Graefelfing, Germany, laser power 50 mW) was used in combination with a 60x (Nikon, NA=1.0) microscope objective. The linearly polarized laser light was rotated using a halfwave plate. The spectra were acquired using an air-cooled CCD (PI-MAX, Princeton Instruments Inc., Trenton, NJ, USA) behind a grating (300 gmm⁻¹) spectrograph (Acton, Princeton Instruments Inc., Trenton, NJ, USA) with a spectral resolution of 6 cm⁻¹. The slit width was 100 µm.

It could be observed that sonochemically modified silicon is optically active, i.e. it yields photoluminescence (Fig. 6). This is a very important characteristic because it may allow light amplification and therefore lasing by taking advantage of the microcavity light confinement effect. Moreover, it was possible to measure the light emitted by a single point on the silicon surface by making 3D reconstruction of the porous top layer structure (Fig. 7, 8). This allows to understand that the modification first of all starts from the surface (Fig. 7): all fluorescent dots are on the surface of sonochemically exposed samples.

Further modification allows to go deeper inside the silicon and it is evident from Fig. 8 that the fluorescent centers are distributed both on the surface and in the inner structure of porous silicon.

This means that there are defects which could be also used for charge separation allowing to develop an advanced method in the area of photovoltaic devices.

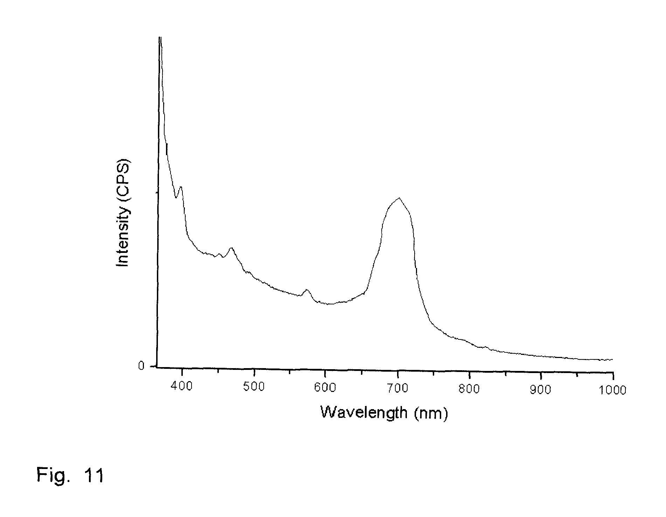

Raman scattering occurs by the interaction of longitudinal and transverse optical phonons with incident photons. For bulk Si, such phonon-photon interaction is limited to the center of the Brillouin zone but, in the case of porous Si, the presence of quantum-size nanostructures relaxes the associated selection rule so that the envelope of the Raman peak depends upon nanostructure shape and size parameters. In the present case, the Raman spectra (Fig. 10) indicate that porous silicon is formed. Moreover, the TEM image (Fig. 10b) shows dots of silicon in the matrix with the size ca 2-3 nm. Fig. 11 shows the PL spectra of porous silicon samples with formed crystal and red, orange, yellow, green, and blue emission due to porosity.

### Conclusions

The present application demonstrates the formation of developed, porous silicon by the "green" method of ultrasonication: i) one-step formation of silicon with different porous structure, ii) formation of photoluminescent centers, defect states which could be centers for charge separation and iii) possibility of patterned surface exposure to localize the effect of modification.

The novel method of ultrasound assisted modification of silicon which is applicable on a large range of materials providing a basis for many types of applications in chemistry, materials science, photovoltaic and optics where the structure and properties of silicon can be easily controlled by adjusting the specific conditions of ultrasound treatment.

## Claims

1. A method for modifying the structural properties of silicon by ultrasonication in the presence of a liquid HF-free medium wherein said structural properties are selected from the group consisting of roughness, porosity, crystallinity, number of defect states, hydrogen-terminated bonds, quantum dots, and centers for charge separation.

2. The method according claim 1, wherein a porous silicon having pores in a size range of from 0.5 nm to 500 nm is produced.

3. The method according to claim 1 or 2, wherein the silicon to be modified is amorphous, polycrystalline, mono-crystalline or represents or comprises quantum dots.

4. The method according to any one claims 1 to 3, wherein the silicon to be modified is the surface of a silicon wafer, silicon deposited on a substrate, or silicon particles in solution.

5. The method according to claim 4, wherein the substrate is selected from the group consisting of glass, a metal, polymer, ceramic or silicon material.

6. The method according to claim 4 or 5, wherein the substrate is patterned.

7. The method according to any one of claims 1 to 6, wherein the liquid medium comprises a solvent which is selected from the group consisting of an organic solvent, including an alcohol, water, an ionic liquid or a mixture thereof.

8. The method according to claim 7, wherein the liquid medium further comprises at last one additive.

9. The method according to claim 8, wherein the additive is selected from the group consisting of hydrogen, a hydrogen donor, e.g. NaBH₄, Mg or A1, a charged or uncharged surfactant, a polyelectrolyte, a complexation agent comprising an element E, with E = N, O, F, H, or mixtures thereof.

10. The method according to claim 9, wherein the additive is a complexation agent comprising an element E, with E = N, O, F, H) and Si-E bonds are formed on the surface of the silicon during ultrasonication.

11. The method according to claim 10, wherein the additive is a complexation agent comprising or providing the element E in an active ionic form or radical form.

12. The method according to claim 10 or 11, wherein the complexation agent comprises or provides an agent selected from the group consisting of F⁻, NH₃, NH₄⁺ , H•, OH•

13. The method according to claim 9 or 10, wherein the additive is selected from the group consisting of hydrogen and a hydrogen donor, e.g. NaBH₄, Mg or A1, and hydrogen-terminated bonds are formed on the surface of the silicon during ultrasonication.

14. The method according to any one of claims 1 to 13, which affects one or more of the following properties of the silicon: electronic properties, charge separation, optical properties, electro-adsorption and electro-reflection.
